# EUROPÄISCHE PATENTANMELDUNG

(11) **EP 1 953 518 A2**
(43) Veröffentlichungstag der Anmeldung: **06.08.2008**
(21) Anmeldenummer: 08100237.0
(22) Anmeldetag: 09.01.2008
(51) Int. Cl.: G01M 11/06

(54) **Verfahren und Vorrichtung zum Ausrichten eines Fahrzeug-Umfeldsensors oder Scheinwerfers**

(30) Priorität: 01.02.2007 DE 102007005086
(71) Anmelder: ROBERT BOSCH GMBH, 70442 Stuttgart (DE)
(72) Erfinder: Nobis, Guenter, 72622, Nuertingen (DE); Uffenkamp, Volker, 71642, Ludwigsburg (DE)

(57) **Zusammenfassung**

Die Erfindung betrifft ein Verfahren und eine Vorrichtung (13) mit einer Kamera (14) und einer Auswerteeinrichtung (15) zum Ausrichten eines Abstandssensors (4) an einem Fahrzeug (1). Erfindungsgemäß ist ein Passpunktsystem (16) aus vier Messpunkten (7, 8, 9 und 10) an dem Fahrzeug (1) und aus sechs aus unterschiedlichen Perspektiven aufgenommenen Bildern mittels der Kamera (14) und der Auswerteeinrichtung (15) ermittelbar, eine Fahrbahnebene (12) und eine Fahrachse (17) des Fahrzeug (1) mittels des Passpunktsystems (16), der Kamera (14) und der Auswerteeinrichtung (15) während einer Anfahrt ermittelbar, eine Rückstrahlplatte (19) vor dem Abstandssensor (4) des Fahrzeugs (1) platzierbar und mittels der Kamera (14) und dreier Messpunkte (21) an der Rückstrahlplatte (19) bezüglich der Fahrachse (17) und der Abstandssensor (4) mittels einer an der Rückstrahlplatte (19) reflektierten Radarsignalstrahlung ausrichtbar.

## Beschreibung

Die Erfindung betrifft ein Verfahren und eine Vorrichtung mit einer Kamera und einer Auswerteeinrichtung zum Ausrichten eines Fahrzeug-Umfeldsensors oder Scheinwerfers an einem Fahrzeug.

Aus der DE 199 41 034 A1 ist eine Einstellvorrichtung mit einem Einstellgerät für Scheinwerfer oder für einen Abstandssensor eines Fahrzeuges und mit einer optischen Justiereinrichtung zum Ausrichten des Einstellgerätes relativ zu dem Fahrzeug bekannt. Durch Aufnahme von an dem Fahrzeug angeordneten Merkmalen ist während der Fahrt zu unterschiedlichen Zeitpunkten nach an sich bekannten trigonometrischen Beziehungen die Fahrachsrichtung berechenbar. Dabei sind zwei Kameras verwendet, die mechanisch stabil verbunden sind und die Verbindung ist zu kalibrieren. Des Weiteren ist eine Rückstrahl- oder Projektionswand zum Ausrichten des Scheinwerfers oder des Abstandssensors verwendet.

Der Erfindung liegt die Aufgabe zugrunde, ein einfaches Verfahren und eine einfache Vorrichtung zum Ausrichten des Fahrzeug-Umfeldsensors oder Scheinwerfers anzugeben.

Diese Aufgabe wird mit den Merkmalen der Hauptansprüche gelöst. Erfindungsgemäß ist ein Passpunktsystem aus vier Messpunkten an dem Fahrzeug und aus sechs aus unterschiedlichen Perspektiven aufgenommenen Bildern mittels der Kamera und der Auswerteeinrichtung ermittelbar, sind Daten zur Ermittlung einer Fahrbahnebene und einer Fahrachse des Fahrzeugs mittels des Passpunktsystems, der Kamera und der Auswerteeinrichtung während der Anfahrt erfassbar, die Fahrbahnebene und die Fahrachse ermittelbar, ist eine Justage-Hilfseinrichtung vor dem Fahrzeug-Umfeldsensor oder Scheinwerfer des Fahrzeugs platzierbar und mittels der Kamera und mindestens dreier Messpunkte an der Justage-Hilfseinrichtung bezüglich der Fahrachse und der Fahrbahnebene ausrichtbar, eine Ausrichtung des Fahrzeug-Umfeldsensors oder Scheinwerfers zur Justage-Hilfseinrichtung ermittelbar und der Fahrzeug-Umfeldsensor oder Scheinwerfer bei Vorliegen einer Fehlausrichtung ausrichtbar.

Beliebige Merkmale eines Kraftfahrzeuges sind als Messpunkte auswählbar und definierbar. Mit den zumindest vier Messpunkten und mit zumindest sechs zu unterschiedlichen Zeitpunkten aufgenommenen Bildern ist ein Passpunktsystem bestimmbar, das als Grundlage zur Erfassung einer dreidimensionalen Ausrichtung eines Objektes dient. In einer ersten Alternative ermöglicht ein Umsetzen der Kamera unterschiedliche Perspektiven des Fahrzeugs. In einer zweiten Alternative sind die aus unterschiedlichen Perspektiven aufgenommen Bildern während einer Anfahrt zu unterschiedlichen Zeitpunkten aufgenommen.

Die Erfassung einer dreidimensionalen Ausrichtung eines Objektes wie des Fahrzeugs oder der Rückstrahlplatte mit nur einer Kamera ist möglich, wenn mindestens drei Messpunkte an dem Objekt vorhanden sind, deren dreidimensionale Lage untereinander in einem lokalen Koordinatensystem bekannt ist. Die Messpunkte bilden dann ein so genanntes Passpunktsystem. Ist ein solches Passpunktsystem, auch als Passpunktfeld bezeichnet, auf dem Fahrzeug angeordnet, so sind Koordinaten der Fahrbahnbeziehungsweise Messplatzebene sowie die Fahrachse des Fahrzeugs und somit das Fahrzeugkoordinatensystem ermittelbar. Für ein solches Passpunktfeld gilt die Randbedingung, dass die drei Messpunkte nicht auf einer Geraden liegen dürfen. Zweckmäßigerweise spannen die drei Messpunkte ein möglichst großes Dreieck auf, bei mehr als drei Messpunkten wird ein möglichst großes Vieleck aufgespannt. Bei mehr als drei Messpunkten ist es zudem vorteilhaft, die Messpunkte des Passpunkfeldes räumlich, also dreidimensional anzuordnen.

Während der Anfahrt auf den Messplatz ist durch Aufnahme mehrerer Bilder mittels der Kamera und Auswertung des Fahrzeugpasspunktsystems die dreidimensionale Bewegungsbahn des Fahrzeugs bestimmbar. Die Bewegungsbahn der Messpunkte definieren die Fahrbahn- beziehungsweise die Messplatzebene sowie die Fahrachse des Fahrzeugs, dass heißt das Fahrzeugkoordinatensystem. Bei stehendem Fahrzeug bleibt das Fahrzeugkoordinatensystem bestimmbar, wenn die Messpunkte an dem Fahrzeug fixiert bleiben.

Die Fahrachse ergibt sich aus der Verbindung von mindestens zwei Schnittpunkten des optischen Abbildungsstrahls eines auf dem Bildsensor abgebildeten Fahrzeug-Messpunktes mit der Fahrbahnebene aus mindestens zwei Bildern während der Anfahrt. Vorteilhaft wird die Fahrachse als ausgleichende Gerade mittels statistischen Auswerteverfahren bestimmt aus allen Bildern und allen Fahrzeug-Messpunkten.

Bei mehr als zwei Bildern während der Anfahrt kann eine Analyse der Geradlinigkeit der Fahrachse zur Überwachung des Messvorganges verwendet werden. Wird eine Kurvenfahrt erkannt, können entweder die Messdaten korrigiert werden oder der Anwender wird aufgefordert, die Messung zu wiederholen.

Fährt das Fahrzeug mit konstanter Geschwindigkeit auf einer ebenen Fahrbahn und erfolgt die Bildaufzeichnung mit konstanter Frequenz, ergeben sich Schnittpunkte mit einer ebenen Fahrbahn mit gleichem Abstand zueinander. Wenn die Messpunktabstände voneinander abweichen, wird eine Unebenheit der Fahrbahn erkennbar. Wird eine Fahrbahnunebenheit erkannt, können entweder die Messdaten korrigiert werden oder der Anwender wird aufgefordert, die Messung an einem anderen Messplatz zu wiederholen.

Durch das Fahrzeugpasspunktsystem ist die Kameraposition relativ zum Fahrzeugkoordinatensystem bestimmbar. Für eine mobile Kamera ist von daher eine Zuordnung von Koordinaten zwischen Kamera und Fahrbahnebene ermittelbar. Während der Anfahrt eines jeden Fahrzeugs ist kontinuierlich die Position und Lage der Kamera bestimmbar, so lange die Kamera zumindest drei Messpunkte des Fahrzeugpasspunktsystems sieht. Allfällige Vibrationen, hervorgerufen durch Arbeiten in der Umgebung des Messplatzes, sind kompensierbar. Damit ist die Messgenauigkeit auch bei mobiler Vorrichtung gewährleistet, auch wenn die Vorrichtung nur mäßig stabil am Messplatz befestigt ist, insbesondere dann, wenn die Kamera auf einem Stativ angeordnet ist.

Das bedeutet, auf eine feste Zuordnung von Kamera und Messplatz ist verzichtet und die Kamera sowie die Auswertereinrichtung sind an verschiedenen Messplätzen einsetzbar.

Die Justage-Hilfseinrichtung ist für einen eine Radarsignalstrahlung ausstrahlenden Abstandssensor als Rückstrahlplatte ausgebildet. Als Fahrzeug-Umfeldsensor kann also ein Abstandsradar, das mit Radarstrahlen arbeitet, oder ein mit Licht arbeitender Lidarsensor Verwendung finden. Die Rückstrahlplatte, auch als Reflektor bezeichnet, reflektiert eine Radarsignalstrahlung. Eine Lage der Rückstrahlplatte und eine Reflexionsrichtung sind mittels der drei an der Rückstrahlplatte angeordneten Messpunkte, die das Passpunktsystem bilden, definiert. Die zumindest drei Messpunkte werden mittels der Kamera erfasst und die Lage der Messpunkte und damit die Lage der Rückstrahlplatte bezüglich der Messplatzebene bestimmt. Die Rückstrahlplatte wird anhand der drei Messpunkte so justiert, dass die Reflexionsrichtung parallel der Fahrachse ausgerichtet ist. Die Radarsignalstrahlung wird vom Abstandssensor ausgestrahlt und die reflektierte Strahlung von einem Empfänger des Sensors wieder empfangen. Die Radarsignalstrahlung wird als Radarsignalkeule mit einer maximalen Srahlenstärke in der Keulenmitte ausgestrahlt. Wird die Radarsignalstrahlung der Keulenmitte parallel der Fahrtrichtung ausgesandt, so sind Einfallswinkel und Ausfallswinkel der Radarsignalstrahlung der Keulenmitte an dem Reflektor 0 ° und die Stärke der empfangenen Strahlung erreicht ein Maximum. Da lediglich die Stärke der empfangenen Strahlung bekannt und die Dejustage unbekannt ist, ist zunächst einmal die Richtung der Justage zu ermitteln. Erst dann kann in eine richtige Richtung kompensiert werden.

Mit den Koordinaten der Fahrbahnebenen und der bekannten Fahrachse sowie der an der Rückstahlplatte reflektierten Radarsignalstrahlung ist eine Dejustage des Abstandssensors kompensierbar.

Die Messpunkte des Passpunktsystems sind messbare Punkte und werden auch als Passpunkte oder Merkmale bezeichnet. Als Merkmale sind markante Merkmale des Objektes, also des Kraftfahrzeuges oder der Rückstrahlplatte, oder künstlich aufgebrachte Merkmale verwendbar. Künstliche Merkmale werden auch als Adapter oder selbsthaftende Teile bezeichnet. Die vorzugsweise künstlich aufgebrachten Merkmale weisen eine geometrische Figur mit einem guten Kontrast zu der Umgebung auf.

Geeignet sind kreisförmige, dreiecksförmige oder quadratische Merkmale. Die Merkmale können auch als Körper, zum Beispiel als Kugel, Kegel oder Zylinder ausgebildet sein.

Die Bildkoordinaten der auf den Bildsensor abgebildeten Messpunkte werden durch an sich bekannte Methoden der Bildanalyse ermittelt. Dies betrifft sowohl die künstlichen Merkmale als auch an dem Objekt vorhandene Merkmale. Die Bildanalyse stützt sich auf die Erkennung zum Beispiel von Kanten, Mustern, Grauwerten oder Grauwertgradienten. In einem einfachen Beispiel ergeben sich die Bildkoordinaten eines kreisförmigen Messpunktes aus dem Schwerpunkt der Grauwerte seiner Abbildung auf dem Bildsensor.

In einfacher Weise sind die Messpunkte auf selbsthaftenden Teilen angeordnet, die beliebig an dem Kraftfahrzeug aufbringbar sind. Die selbsthaftenden Teile sind als Klebestreifen oder als Magnetplatten ausgebildet und so an dem Fahrzeug angeordnet, dass diese von der Kamera erfassbar sind, also vorzugsweise auf der Motorhaube oder auf dem Dach des Kraftfahrzeuges.

In vorteilhafter Weise sind zwei auf einen Träger angeordnete Messpunkte parallel der Fahrbahnebene ausrichtbar. Eine Verbindungslinie zwischen den zwei Messpunkten weist einen Winkel größer als Null zu der Fahrtrichtung auf. Vorzugsweise liegt die Verbindungslinie in Fahrzeugquerrichtung und senkrecht zur Fahrtrichtung. Ist der Messplatz nivelliert so können auch die beiden Messpunkte in einfacher Weise nivelliert sein. Die Nivellierung erfolgt mit einer Libelle oder einem elektronischen Neigungssensor. Durch Kenntnis der Messpunkte in dem lokalen Fahrzeugpasspunktsystem sind die Messpunkte von Bild zu Bild transformierbar, so dass alle Messpunkte nach Rückrechnung aller Punkte aller Bilder der Aufnahmesequenz zum Beispiel in das erste Bild, in einem gemeinsamen Koordinatensystem vorliegen. Aus diesem gemeinsamen Koordinatensystem kann das Fahrzeugkoordinatensystem abgeleitet werden, indem der Ursprung zum Beispiel durch den ersten nivellierten Punkt im ersten Bild festgelegt wird, weiterhin die X-Achse durch die Bewegung des ersten nivellierten Punktes und die X-Y-Ebene durch die Vorgabe, dass sich beide nivellierten Punkte in einer Ebene parallel zur Fahrbahnebene bewegt haben und somit die selbe Höhe über der Fahrbahn aufweisen.

In einfacher Weise weist die Auswerteeinrichtung eine Anzeigeeinheit auf. Dann sind notwendige Justageschritte auf der Anzeigeeinheit darstellbar. Insbesondere sind Anweisungen für drei Justageschrauben des Abstandssensors darstellbar.

In einfacher Weise steuert die Auswerteeinrichtung einen Montageroboter zur Ausrichtung der Justage-Hilfseinrichtung, insbesondere der Rückstrahlplatte. Die Rückstrahlplatte wird so ausgerichtet, dass der Normalenvektor der Rückstrahlplatte parallel zu der Fahrachse und zur Fahrbahnebene liegt.

In einfacher Weise steuert die Auswerteeinrichtung einen Montageroboter zur Ausrichtung des Fahrzeug-Umfeldsensors oder Scheinwerfers, insbesondere des Abstandssensors. Der Montageroboter wirkt direkt auf Justierschrauben des Abstandssensors ein und kompensiert eine Dejustage dieses Abstandssensors. Es ist möglich, für die Ausrichtung des Abstandssensors und der Justage-Hilfseinrichtung denselben Montageroboter zu verwenden. Alternativ dazu ist die Justage-Hilfseinrichtung auf ein Fahrgestell aufgesetzt, dass von der Auswerteeinrichtung ansteuerbar ist und die Justage-Hilfseinrichtung über den Messplatz verfährt und bezüglich der Fahrachse und der Fahrebene ausrichtet.

Das Verfahren und die Vorrichtung sind entsprechend auch für die Justage weiterer Fahrzeug-Umfeldsensoren und Scheinwerfer einsetzbar. Als sogenannte Justage-Hilfseinrichtung ist anstelle der Rückstrahlplatte eine optische Kalibriertafel für bildgebende Sensoren in oder an einem Fahrzeug, eine Lichtverteilung von Scheinwerfer erfassende Einrichtung, eine oder mehrere Reflektorplatten für Nahfeld-Radarsensoren oder Ultraschallsensoren einsetzbar. Damit wird gewährleistet, dass die Abstrahlrichtung immer zu der Fahrtrichtung und der Fahrbahnebene, das heißt immer in der vorgesehenen Richtung im Fahrzeugkoordinatensystem ausgerichtet ist.

Das Verfahren ermöglicht eine Justage des Abstandssensors, auch als Radarsensor oder kurz als Sensor bezeichnet. Damit ist gewährleistet, dass die Abstrahlrichtung immer zu der Fahrtrichtung und der Fahrbahnebenen ausgerichtet werden kann. Aufgrund nicht zu vernachlässigbarer Toleranzen im Fahrzeugbau ist das Verfahren damit eine gute Möglichkeit zur Justage, entweder automatisiert in der Fertigung oder manuell in der Werkstatt. Sowohl die Abstandssensor- als auch die Fahrzeugfertigung unterliegen komplexen Prozessen, so dass auch unter optimalen Bedingungen eine Kette von Toleranzen entsteht, die zu einer nicht vernachlässigbaren Abweichung der Abstrahlrichtung des Sensors von der konstruktiv geplanten Richtung führt. Eine Justage ist damit unerlässlich. In der Werkstatt ist nach durchgeführten Karosserie- und/oder Fahrwerksreparaturen eine Überprüfung der Ausrichtung des Sensors und gegebenenfalls eine Justage zwingend notwendig. Die Justage ist hinsichtlich eines Nick-, Gier- und Wankwinkels durchführbar. Bei einem Sensor mit kegelförmiger Abstrahlung sind lediglich der Nick- und der Gierwinkel einzustellen, das Verfahren ist jedoch auf alle Winkel gleichermaßen anwendbar.

Für Sensoren, die lediglich eine Einstellung des Nick- und Gierwinkels benötigen, entfällt die Notwendigkeit zur Nivellierung zweier Messpunkte quer zur Fahrtrichtung.

In einer ersten Variante ist die Rückstrahlplatte, auch als Rückstrahlwand bezeichnet, beweglich, das Fahrzeug fährt auf den Messplatz und die Rückstrahlwand fährt vor das Fahrzeug. Nach Dejustagekompensation fährt die Rückstrahlwand beiseite und das Fahrzeug verlässt den Messplatz in Vorwärtsfahrt. In einer zweiten Variante ist die ausrichtbare Rückstrahlwand ortsfest und das Fahrzeug fährt vor die Rückstrahlwand und verlässt den Messplatz durch Rückwärtsfahrt.

Zum besseren Verständnis der Erfindung ist nachfolgend ein Ausführungsbeispiel mit einem Abstandssensor beispielhaft als Fahrzeug-Umfeldsensor und einer Rückstrahlpatte beispielhaft für eine Justage-Hilfseinrichtung anhand der Zeichnung näher erläutert.

Es zeigen
Fig. 1 ein Kraftfahrzeug mit vier Messpunkten und eine Vorrichtung mit einer Kamera und einer Auswerteeinrichtung zum Ausrichten eines Abstandssensors an dem Fahrzeug auf einem Messplatz mittels einer ein Passpunktsystem aufweisenden Rückstrahlplatte in perspektivischer Darstellung,
Fig. 2 ein Passpunktsystem abgebildet auf einem Bildsensor einer Kamera in schematischer Darstellung und
Fig. 3 einen nivellierbaren mobilen Träger mit zwei Messpunkten in perspektivischer Darstellung.

In den verschiedenen Figuren sind ähnliche oder dieselben Elemente durch gleiche Bezugszeichen bezeichnet.

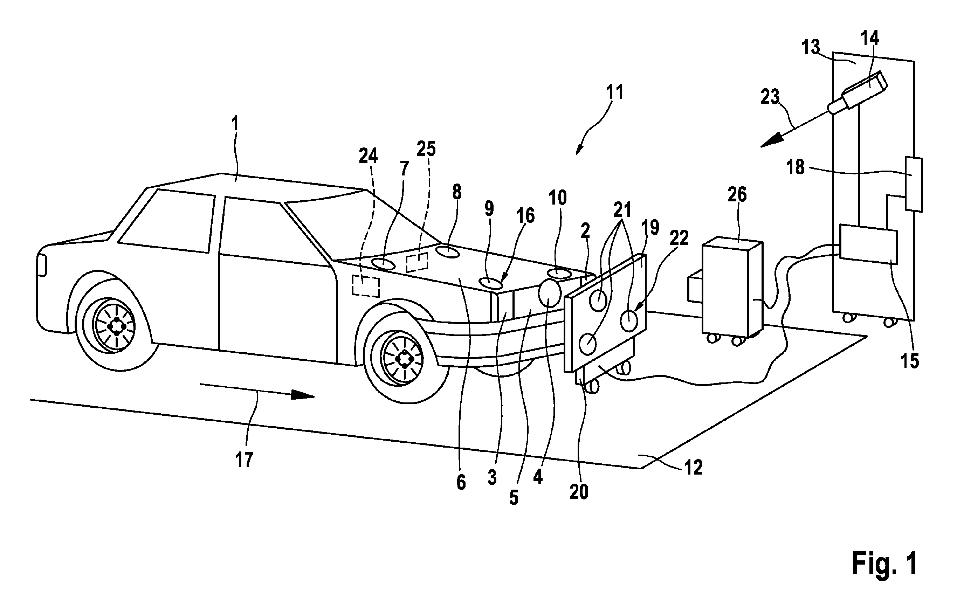

Fig. 1 zeigt ein Kraftfahrzeug 1 mit Scheinwerfern 2 und 3 und mit einem Abstandssensor 4 in einem Frontbereich 5. Auf einer Motorhaube 6 sind vier Messpunkte 7, 8, 9 und 10 beliebig angeordnet. Das Kraftfahrzeug 1, kurz als Fahrzeug bezeichnet, steht auf einem Messplatz 11, der eine Messplatzebene 12, auch als Fahrbahnebene bezeichnet, aufweist. Der Messplatz 11 weist eine Vorrichtung 13 mit einer Kamera 14 und einer Auswerteeinrichtung 15 auf. Während einer Anfahrt des Fahrzeugs 1 auf den Messplatz 11 sind von der Kamera 14 zumindest sechs Bilder zu unterschiedlichen Zeitpunkten aufgenommen, auf denen die vier Messpunkte 7, 8, 9 und 10 abgebildet sind. Daraus lässt sich in der Auswertereinrichtung 15 ein Passpunktsystem 16 des Fahrzeugs 1 ermitteln. Während der Anfahrt des Fahrzeugs 1 auf den Messplatz 11 ist von der Kamera 14 eine Bewegungsbahn der Messpunkte 7, 8, 9 und 10 aufgezeichnet und mittels der Bewegungsbahnen und des Passpunktsystems 16 des Kraftfahrzeugs 1 ist in der Auswerteeinrichtung 15 die Fahrbahnebene 12 und eine Fahrachse 17 bestimmbar. Die Auswerteeinrichtung 15 steuert eine Anzeigeeinheit 18 an, auf dem notwendige Verfahrensschritte darstellbar sind. Zwischen der Kamera 14 und dem Fahrzeug 1 ist eine Rückstrahlplatte 19 angeordnet. Die Rückstrahlplatte 19 sitzt auf einem Fahrgestell 20 auf, das von der Auswerteeinrichtung 15 ansteuerbar ist. Das Fahrgestell 20 ist als Roboter ausgebildet und in der Lage, die aufgesetzte Rückstrahlplatte 19 zu bewegen und auszurichten. Dazu weist die Rückstrahlplatte 19 drei Messpunkte 21 eines zweiten Passpunktsystems 22 auf, die von der Kamera 14 erfassbar sind. Die Kamera 14 weist eine optische z-Achse 23 auf. Mittels der Kamera 14, der Auswerteeinrichtung 15, des Fahrgestells 20 und der drei Messpunkte 21 ist die Rückstrahlplatte 19 senkrecht auf die Fahrachse 17 und Fahrbahnebene 12 ausrichtbar. Ein Empfänger des Abstandssensors 2 erkennt das reflektierte Signal und gibt über eine in dem Kraftfahrzeug 1 angeordnete Auswerteeinrichtung 24 Justagehinweise aus. Je stärker das empfangene Signal ist, umso besser ist der Sensor 2 ausgerichtet. Die Hinweise sind in einer Anzeigeeinheit 25 des Fahrzeugs 1 darstellbar. Die Hinweise betreffen auszuführende Umdrehungen für Justageschrauben des Sensors 2. Vorzugsweise kommuniziert die Auswerteeinrichtung 24 des Kraftfahrzeugs 1 mit der Auswerteeinrichtung 15 der Vorrichtung 13, so dass ein Montageroboter 26 auf Justierschrauben des Abstandssensors 4 einwirkt und den Abstandssensor 4 ausrichtet und damit eine Dejustage kompensiert.

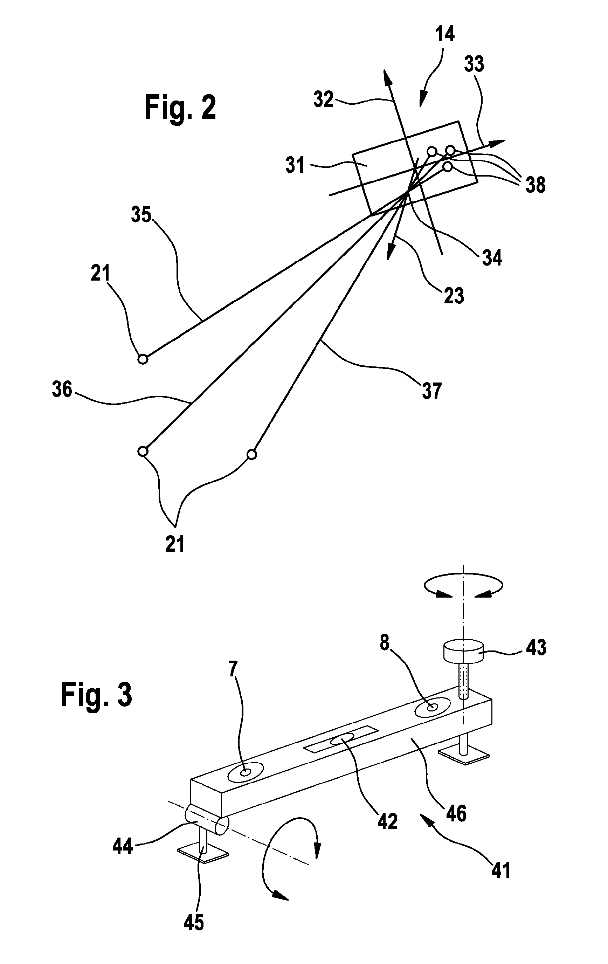

Figur 2 zeigt einen ebenen Bildsensor 31 der Kamera 14. Der Bildsensor 31 weist eine x-Achse 32, eine y-Achse 33 und die optische z-Achse 23 auf. In einem Projektionszentrum 34 bündeln sich Abbildungsstrahlen 35 - 37, mit deren Hilfe sich die Messpunkte 21 des Passpunktsystems 22 auf den Bildsensor 31 als Bildpunkte 38 abbilden lassen. Aufgrund der Lage der Bildpunkte 38 auf dem Bildsensor 31 lässt sich anhand trigonometrischer Funktionen die Fehlstellung der Rückstrahlplatte 19 berechnen und korrigieren. Die Rückstrahlplatte 19 ist senkrecht auf die Fahrachse 17 ausrichtbar.

Figur 3 zeigt einen nivellierbaren mobilen Träger 41 mit zwei Messpunkten 7, 8. Mittels einer Libelle 42, auch als Linse oder Auge einer Wasserwaage bezeichnet, sind die beiden Messpunkte 7, 8 auf dem Träger 41 ausrichtbar. Mittels einer Schraube 43 ist eine Neigung einstellbar und ein Gelenk 44 verbindet zwei gegeneinander bewegliche Teile 45, 46 des Trägers 41. Der Träger 41 ist auf die Motorhaube 6 aufsetzbar.

## Patentansprüche

1. Verfahren zum Ausrichten eines Fahrzeug-Umfeldsensors (4) oder Scheinwerfers (2, 3) an einem Fahrzeug (1) mittels einer Vorrichtung (13), die eine Kamera (14) und eine Auswerteeinrichtung (15) aufweist, **gekennzeichnet durch** folgende Verfahrensschritte:
ein Passpunktsystem (16) wird aus vier Messpunkten (7, 8, 9 und 10) an dem Fahrzeug (1) und aus sechs aus unterschiedlichen Perspektiven aufgenommenen Bildern mittels der Kamera (14) und der Auswerteeinrichtung (15) ermittelt,
Daten zur Ermittlung einer Fahrbahnebene (12) und einer Fahrachse (17) des Fahrzeug (1) werden mittels des Passpunktsystems (16), der Kamera (14) und der Auswerteeinrichtung (15) während einer Anfahrt erfasst,
die Fahrbahnebene (12) und die Fahrachse (17) werden ermittelt,
eine Justage-Hilfseinrichtung (19) wird vor dem Fahrzeug-Umfeldsensor (4) oder Scheinwerfer (2, 3) des Fahrzeugs (1) platziert und mittels der Kamera (14) und mindestens dreier Messpunkte (21) an der Justage-Hilfseinrichtung (19) bezüglich der Fahrachse (17) und der Fahrbahnebene (12) ausgerichtet,
eine Ausrichtung des Fahrzeug-Umfeldsensors (4) oder Scheinwerfers (2, 3) zur Justage-Hilfseinrichtung (19) wird ermittelt und
der Fahrzeug-Umfeldsensor (4) oder Scheinwerfer (2, 3) wird bei Vorliegen einer Fehlausrichtung ausgerichtet.

2. Verfahren nach Anspruch 1, **dadurch gekennzeichnet, dass** die Messpunkte (7, 8, 9 und 10) auf selbsthaftenden Teilen angeordnet sind.

3. Verfahren nach Anspruch 1, **dadurch gekennzeichnet, dass** als Messpunkte (7, 8, 9 und 10) markante Merkmale des Fahrzeugs (1) verwendet sind.

4. Verfahren nach einem der vorherigen Ansprüche 1 bis 3, **dadurch gekennzeichnet, dass** zwei auf einem Träger (41) angeordnete Messpunkte (7 bis 10) parallel der Fahrbahnebene (12) ausrichtbar sind.

5. Verfahren nach Anspruch 1, **dadurch gekennzeichnet, dass** die Auswerteeinrichtung (15) eine Anzeigeeinheit (18) aufweist.

6. Verfahren nach Anspruch 1, **dadurch gekennzeichnet, dass** die Auswerteeinrichtung (15) ein Fahrgestell (20) zur Ausrichtung der Justage-Hilfseinrichtung (19) steuert.

7. Verfahren nach Anspruch 1, **dadurch gekennzeichnet, dass** die Auswerteeinrichtung (15) einen Montageroboter (26) zur Ausrichtung der Justage-Hilfseinrichtung (19) steuert.

8. Verfahren nach Anspruch 1, **dadurch gekennzeichnet, dass** die Auswerteeinrichtung (15) einen Montageroboter (26) zur Ausrichtung des Fahrzeug-Umfeldsensors (4) oder Scheinwerfers (2, 3) steuert.

9. Vorrichtung (13) mit einer Kamera (14) und einer Auswerteeinrichtung (15) zum Ausrichten eines Fahrzeug-Umfeldsensors (4) oder Scheinwerfers (2, 3) an einem Fahrzeug (1), **dadurch gekennzeichnet, dass** ein Passpunktsystem (16) aus vier Messpunkten (7, 8, 9 und 10) an dem Fahrzeug (1) und aus sechs aus unterschiedlichen Perspektiven aufgenommenen Bildern mittels der Kamera (14) und der Auswerteeinrichtung (15) ermittelbar ist, Daten zur Ermittlung einer Fahrbahnebene (12) und einer Fahrachse (17) des Fahrzeugs (1) mittels des Passpunktsystems (16), der Kamera (14) und der Auswerteeinrichtung (15) während einer Anfahrt erfassbar, die Fahrbahnebene (12) und die Fahrachse (17) ermittelbar sind, eine Justage-Hilfseinrichtung (19) vor dem Fahrzeug-Umfeldsensor (4) oder Scheinwerfer (2, 3) des Fahrzeugs (1) platzierbar und mittels der Kamera (14) und mindestens dreier Messpunkte (21) an der Justage-Hilfseinrichtung (19) bezüglich der Fahrachse (17) und der Fahrbahnebene (12) ausrichtbar, eine Ausrichtung des Fahrzeug-Umfeldsensors (4) oder Scheinwerfers (2, 3) zur Justage-Hilfseinrichtung (19) ermittelbar und der Fahrzeug-Umfeldsensor (4) oder Scheinwerfer (2, 3) bei Vorliegen einer Fehlausrichtung ausrichtbar ist.

10. Verfahren zum Ausrichten eines Fahrzeug-Umfeldsensors (4) oder Scheinwerfers (2, 3) an einem Fahrzeug (1) mittels einer Vorrichtung (13), die eine Kamera (14) und eine Auswerteeinrichtung (15) aufweist, **gekennzeichnet durch** folgende Verfahrensschritte:
ein Passpunktsystem (16) wird aus vier Messpunkten (7, 8, 9 und 10) an dem Fahrzeug (1) und aus sechs aus unterschiedlichen Perspektiven aufgenommenen Bildern mittels der Kamera (14) und der Auswerteeinrichtung (15) ermittelt,
Daten zur Ermittlung einer Fahrbahnebene (12) und einer Fahrachse (17) des Fahrzeug (1) werden mittels des Passpunktsystems (16), der Kamera (14) und der Auswerteeinrichtung (15) während einer Anfahrt erfasst,
die Fahrbahnebene (12) und die Fahrachse (17) werden ermittelt,
eine Justage-Hilfseinrichtung (19) vor dem Fahrzeug-Umfeldsensor (4) oder Scheinwerfer (2, 3) des Fahrzeugs (1) wird mittels der Kamera (14) und mindestens dreier Messpunkte (21) an der Justage-Hilfseinrichtung (19) bezüglich der Fahrachse (17) und der Fahrbahnebene (12) ausgerichtet,
eine Ausrichtung des Fahrzeug-Umfeldsensors (4) oder Scheinwerfers (2, 3) zur Justage-Hilfseinrichtung (19) wird ermittelt und
der Fahrzeug-Umfeldsensor (4) oder Scheinwerfer (2, 3) wird bei Vorliegen einer Fehlausrichtung ausgerichtet.

11. Vorrichtung (13) mit einer Kamera (14) und einer Auswerteeinrichtung (15) zum Ausrichten eines Fahrzeug-Umfeldsensors (4) oder Scheinwerfers (2, 3) an einem Fahrzeug (1), **dadurch gekennzeichnet, dass** ein Passpunktsystem (16) aus vier Messpunkten (7, 8, 9 und 10) an dem Fahrzeug (1) und aus sechs aus unterschiedlichen Perspektiven aufgenommenen Bildern mittels der Kamera (14) und der Auswerteeinrichtung (15) ermittelbar ist, Daten zur Ermittlung einer Fahrbahnebene (12) und einer Fahrachse (17) des Fahrzeugs (1) mittels des Passpunktsystems (16), der Kamera (14) und der Auswerteeinrichtung (15) während der Anfahrt erfassbar, die Fahrbahnebene (12) und die Fahrachse (17) ermittelbar sind, eine Justage-Hilfseinrichtung (19) vor dem Fahrzeug-Umfeldsensor (4) oder Scheinwerfer (2, 3) des Fahrzeugs (1) mittels der Kamera (14) und mindestens dreier Messpunkte (21) an der Justage-Hilfseinrichtung (19) bezüglich der Fahrachse (17) und der Fahrbahnebene (12) ausrichtbar, eine Ausrichtung des Fahrzeug-Umfeldsensors (4) oder Scheinwerfers (2, 3) zur Justage-Hilfseinrichtung (19) ermittelbar und der Fahrzeug-Umfeldsensor (4) oder Scheinwerfer (2, 3) bei Vorliegen einer Fehlausrichtung ausrichtbar ist.
